# EUROPÄISCHE PATENTSCHRIFT

(11) **EP 4 567 381 B1**
(45) Veröffentlichungstag und Bekanntmachung des Hinweises auf die Patenterteilung: **04.03.2026**
(21) Anmeldenummer: 23214815.5
(22) Anmeldetag: 07.12.2023
(51) Int. Cl.: G01D 5/20

(54) **INDUKTIVE POSITIONSMESSEINRICHTUNG**
INDUCTIVE POSITION MEASURING DEVICE
DISPOSITIF INDUCTIF DE MESURE DE POSITION

(43) Veröffentlichungstag der Anmeldung: 11.06.2025
(73) Patentinhaber: Dr. Johannes Heidenhain GmbH, 83301 Traunreut (DE)
(72) Erfinder: FRANK, Alexander, 83278 Traunstein (DE); HEUMANN, Martin, 83278 Traunstein (DE); TIEMANN, Marc Oliver, 83329 Waging am See (DE)

(56) Entgegenhaltungen:
- EP-A2- 2 515 086
- DE-A1- 102012 223 037
- DE-A1- 102020 112 721
- DE-A1- 102023 201 023

## Beschreibung

### GEBIET DER TECHNIK

Die Erfindung betrifft eine induktive Positionsmesseinrichtung zur Bestimmung von Relativpositionen gemäß dem Anspruch 1.

Induktive Positionsmesseinrichtungen werden beispielsweise als Messgeräte zur Bestimmung der Relativposition zweier zueinander verschiebbarer beziehungsweise drehbarer Elemente verwendet. Bei induktiven Positionsmesseinrichtungen sind häufig Erregerspulen und Empfängerspulen etwa in Form von Leiterbahnen auf einer gemeinsamen meist mehrlagigen Leiterplatte aufgebracht, wobei diese Einheit als Abtastelement bezeichnet werden kann. Diesem Abtastelement gegenüber befindet sich ein Skalenelement, auf dem beispielsweise Stege und Lücken als Teilungsstruktur angeordnet sind. Wenn an der Erregerleitung ein zeitlich wechselnder elektrischer Erregerstrom angelegt wird, werden in den Empfängerspulen beziehungsweise -leitungen während der Relativbewegung zwischen dem Skalenelement und dem Abtastelement von der Relativposition abhängige Signale erzeugt. Diese Signale werden dann in einer Auswerteelektronik weiterverarbeitet.

Durch eine derartige Positionsmesseinrichtung kann eine lineare Position des Abtastelements relativ zum Skalenelement bestimmt werden. Die Erfindung kann aber auch für Positionsmesseinrichtungen verwendet werden, durch welche eine Winkelposition des Abtastelements relativ zum Skalenelement gemessen wird. Die Positionsmesseinrichtung kann insbesondere eine absolute Positionsinformation erzeugen.

### STAND DER TECHNIK

In der DE 10 2012 223037 A1 der Anmelderin wird eine induktive Positionsmessung beschrieben, die versetzte Teilungsstrukturen aufweist.

In der EP 2 515 086 A2 der Anmelderin wird eine induktive Positionsmesseinrichtung beschrieben, die einen Maßstab bestehend aus unterschiedlichen Metallschichten aufweist.

### ZUSAMMENFASSUNG DER ERFINDUNG

Der Erfindung liegt die Aufgabe zugrunde, eine induktive Positionsmesseinrichtung zu schaffen, durch die mit hoher Messgenauigkeit auf einfache Weise eine Bestimmung einer Relativposition in einer ersten Richtung möglich ist, die sich entlang von Empfängerspuren erstreckt.

Diese Aufgabe wird erfindungsgemäß durch die Merkmale des Anspruches 1 gelöst.

Die induktive Positionsmesseinrichtung weist ein Abtastelement und ein Skalenelement auf, wobei das Abtastelement relativ zum Skalenelement beziehungsweise entlang einer ersten Richtung bewegbar beziehungsweise verschieblich angeordnet ist. Die erste Richtung kann eine lineare Richtung oder im Falle einer Erfassung einer Winkelposition eine Umfangsrichtung sein. Das Abtastelement weist zumindest eine Erregerleitung auf. Weiterhin weist das Abtastelement eine erste Empfängerspur auf, die zumindest eine Empfängerleitung umfasst, welche gemäß einem ersten periodischen Muster entlang der ersten Richtung verläuft. Gleichfalls weist das Abtastelement eine zweite Empfängerspur auf, die zumindest eine Empfängerleitung umfasst, welche gemäß einem zweiten periodischen Muster entlang der ersten Richtung verläuft und bezüglich der ersten Empfängerspur in einer zweiten Richtung versetzt angeordnet ist, so dass zwischen diesen entlang der ersten Richtung ein Abstandsstreifen verläuft. Die zweite Richtung ist orthogonal zur ersten Richtung orientiert. Das Skalenelement weist eine Trägerschicht aus einem ersten elektrisch leitfähigen Material auf, sowie eine erste Teilungsspur und eine zweite Teilungsspur. Die zweite Teilungsspur ist bezüglich der ersten Teilungsspur in der zweiten Richtung versetzt angeordnet. Die erste Teilungsspur und die zweite Teilungsspur sind auf der Trägerschicht angeordnet und aus entlang der ersten Richtung alternierend angeordneten Stegen und Lücken gebildet. Dabei umfassen die Stege ein zweites elektrisch leitfähiges Material, beziehungsweise sind aus einem zweiten elektrisch leitfähigen Material hergestellt, das sich von dem ersten Material der Trägerschicht unterscheidet, wobei die Stege und die Trägerschicht elektrisch leitend miteinander verbunden sind. Zwischen der ersten Teilungsspur und der zweiten Teilungsspur (bezogen auf die zweite Richtung) liegt ein Abschirmsteg vor beziehungsweise ist ein Abschirmsteg angeordnet, der ebenfalls aus elektrisch leitfähigem Material besteht. Der Abschirmsteg ist in einer dritten Richtung versetzt gegenüberliegend des Abstandsstreifens angeordnet. Die dritte Richtung ist orthogonal zur ersten Richtung und zur zweiten Richtung orientiert. Die erste Empfängerspur ist also in der zweiten Richtung mit einem Abstand versetzt zur zweiten Empfängerspur angeordnet, so dass zwischen diesen ein sich in der zweiten Richtung erstreckender Abstandsstreifen vorliegt. Zudem erstreckt sich der Abstandsstreifen auch entlang der ersten Richtung. Insbesondere kann sich die Breite des Abstandsstreifens in die zweite Richtung und dessen Länge in die erste Richtung erstrecken. Das Material des Abschirmstegs entspricht dem elektrisch leitfähigen zweiten Material der Stege.

Sowohl die Stege als auch der Abschirmsteg sind bezogen auf die dritte Richtung gegenüber der Trägerschicht erhaben. Mit Vorteil weisen die Stege und die Abschirmstege jeweils die gleiche Ausdehnung beziehungsweise Höhe in der dritten Richtung auf. Gemäß einer vorteilhaften Ausgestaltung der Erfindung weisen die Stege in der dritten Richtung eine Ausdehnung von mindestens 5 µm, insbesondere mindestens 10 µm auf.

Vorteilhafterweise sind die Teilungsspuren durch Strukturierung einer elektrisch leitfähigen ersten Schicht erzeugt, insbesondere durch eine Laserbearbeitung beziehungsweise einen Laserabtrag (Laserablation).

Gemäß einer vorteilhaften Ausgestaltung der Erfindung ist das erste Material der Trägerschicht der Gruppe der ferritischen Edelstähle zugeordnet. Das erste Material, aus dem die Trägerschicht besteht, ist also vorzugsweise ein ferritischer Edelstahl.

Mit Vorteil weist das erste Material der Trägerschicht eine Permeabilitätszahl von mindestens 100, insbesondere mindestens 500, oder mindestens 1000 auf. Die Permeabilitätszahl ist ein Maß für die magnetische Permeabilität beziehungsweise magnetische Leitfähigkeit des ersten Materials der Trägerschicht.

Vorteilhafterweise weist das Skalenelement eine Kompensationsschicht auf, wobei die Trägerschicht bezogen auf die dritte Richtung zwischen den Teilungsspuren und der Kompensationsschicht angeordnet ist. Insbesondere kann die Kompensationsschicht aus dem gleichen zweiten Material hergestellt sein wie die Stege.

Das erste elektrisch leitfähige Material der Trägerschicht weist vorzugsweise einen höheren spezifischen Widerstand auf als das zweite elektrisch leitfähige Material der Stege und / oder des Abschirmstegs. Insbesondere kann der spezifische Widerstand des ersten elektrisch leitfähigen Materials der Trägerschicht mindestens 10mal größer sein als der spezifische Widerstand des zweiten elektrisch leitfähigen Materials. Andererseits kann das erste elektrisch leitfähige Material der Trägerschicht einen spezifischen Widerstand kleiner als 1 Ω·mm²/m aufweisen.

Mit Vorteil weist die Ausdehnung in beziehungsweise entlang der ersten Richtung genau eines Steges und genau einer Lücke der ersten Teilungsspur in Summe eine erste Periodenlänge auf. Zudem weist die Ausdehnung in der ersten Richtung genau eines Steges und genau einer Lücke der zweiten Teilungsspur in Summe eine zweite Periodenlänge auf. Die erste Periodenlänge und die zweite Periodenlänge sind unterschiedlich groß.

Vorteilhafterweise weist das erste periodische Muster der Empfängerleitung der ersten Empfängerspur die erste Periodenlänge auf und das zweite periodische Muster der Empfängerleitung der zweiten Empfängerspur weist die zweite Periodenlänge auf. Die erste Periodenlänge und die zweite Periodenlänge sind wie bereits erwähnt unterschiedlich groß. Das erste und / oder das zweite periodische Muster kann einen sinusförmigen Verlauf aufweisen. Die Positionsmesseinrichtung ist so konfiguriert, dass ein von der Erregerleitung erzeugtes elektromagnetisches Feld durch die Teilungsspur modulierbar ist. Durch die Empfängerleitung der ersten Empfängerspur ist somit ein erstes Signal mit der ersten Periodenlänge erzeugbar und durch die Empfängerleitung der zweiten Empfängerspur ist ein zweites Signal mit der zweiten Periodenlänge erzeugbar. Mit der Positionsmesseinrichtung kann durch die Empfängerleitung der ersten Empfängerspur und durch die Empfängerleitung der zweiten Empfängerspur eine absolute Position des Skalenelements relativ zum Abtastelement, insbesondere nach dem Nonius-Prinzip, bestimmt werden.

Gemäß einer vorteilhaften Ausgestaltung der Erfindung erstreckt sich der Abschirmsteg entlang der ersten Richtung über eine Länge, die größer ist als die erste Periodenlänge oder die zweite Periodenlänge, also größer als die größere der Periodenlängen.

Vorteilhafte Ausbildungen der Erfindung entnimmt man den abhängigen Ansprüchen.

Weitere Einzelheiten und Vorteile der erfindungsgemäßen induktiven Positionsmesseinrichtung ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Schnittansicht eines Rohlings für ein Skalenelement,
- Figur 2: eine Schnittansicht des Skalenelements mit einem Abtastelement,
- Figur 3: eine weitere Schnittansicht des Skalenelements,
- Figur 4: eine Draufsicht auf das Skalenelement,
- Figur 5: eine Draufsicht auf das Abtastelement,
- Figur 6: eine Draufsicht auf ein Detail des Abtastelements insbesondere auf die erste und zweite Empfängerspur und die Erregerleitung,
- Figur 7: eine Ansicht in Messrichtung auf die Positionsmesseinrichtung.

### BESCHREIBUNG DER AUSFÜHRUNGSFORMEN

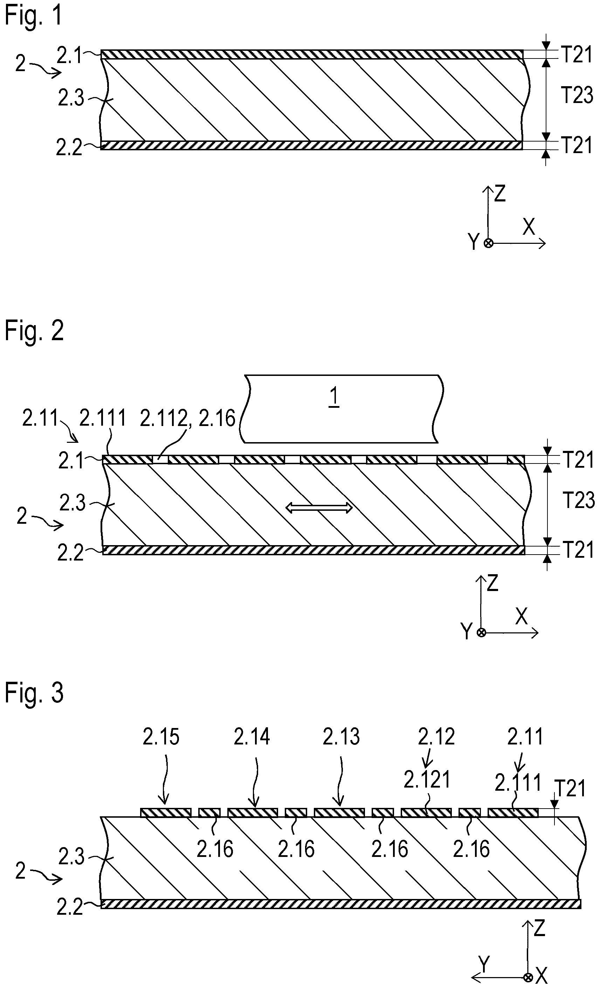

Die Erfindung wird anhand einer Positionsmesseinrichtung beschrieben, welche zur Erfassung einer absoluten Relativposition zwischen einem entlang einer ersten Richtung X (Messrichtung) bewegbaren Abtastelement 1 (siehe Figuren 2, 5 und 7) und einem Skalenelement 2 beziehungsweise einer Skala bestimmt ist.

Das Skalenelement 2 wird im vorgestellten Ausführungsbeispiel aus einem mehrschichtigen Halbzeug hergestellt, wie es in der Figur 1 in einer Schnittzeichnung dargestellt ist. Im vorgestellten Ausführungsbeispiel umfasst das Skalenelement 2 eine vergleichsweise dicke Trägerschicht 2.3, wobei die Stärke T23 der Trägerschicht 2.3 im vorgestellten Ausführungsbeispiel 0,3 mm beträgt. Das erste Material, aus dem die Trägerschicht 2.3 besteht, ist ein ferritischer Edelstahl, dessen Permeabilitätszahl zwischen 100 und 2000 beträgt, beispielsweise kann für die Trägerschicht 2.3 der Stahl EN 1.4016 verwendet werden. Dieser weist einen spezifischen elektrischen Widerstand von etwa 0,60 Ω mm²/m auf.

Das oben genannte Halbzeug, beziehungsweise der Rohling für das Skalenelement 2 umfasst weiterhin auf einer Seite der Trägerschicht 2.3 eine Teilungsschicht 2.1 und auf der gegenüber liegenden Seite der Trägerschicht 2.3 eine Kompensationsschicht 2.2. Die Teilungsschicht 2.1 und die Kompensationsschicht 2.2 sind jeweils aus dem gleichen zweiten Material hergestellt, beispielsweise Aluminium oder Kupfer (spezifischer elektrischer Widerstand Al: 0,027 Ω mm²/m, Cu: 0,017 Ω mm²/m) und weisen jeweils die gleiche Stärke beziehungsweise Ausdehnung T21 in einer dritten Richtung Z auf, hier 24 µm. Es sind also sowohl die Teilungsschicht 2.1 als auch die Trägerschicht 2.3 wie auch die Kompensationsschicht 2.2 elektrisch leitfähig, zudem sind die Teilungsschicht 2.1 und die Trägerschicht 2.3 sowie die Kompensationsschicht 2.2 und die Trägerschicht 2.3 unmittelbar in Kontakt miteinander, so dass diese elektrisch leitend verbunden sind.

Im Zuge der Herstellung des Skalenelements 2 wird die Teilungsschicht 2.1, die unmittelbar auf der Trägerschicht 2.3 angeordnet ist, mit Hilfe eines Laserablationsprozesses strukturiert. Dabei wird die Teilungsschicht 2.1 stellenweise durch einen Laserstrahl über die gesamte Stärke T21 abgetragen. In der Folge entstehen dann unter anderem eine erste Teilungsspur 2.11, eine zweite Teilungsspur 2.12, eine dritte Teilungsspur 2.13, eine vierte Teilungsspur 2.14 und eine fünfte Teilungsspur 2.15 (siehe die Figuren 2 und 3). Die Teilungsspuren 2.11 bis 2.15 sind zueinander in einer zweiten Richtung Y versetzt angeordnet.

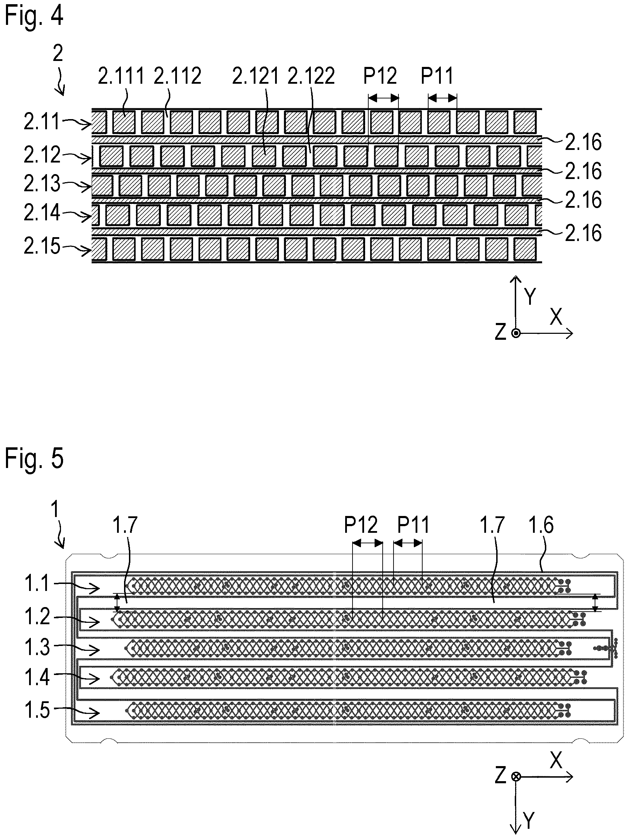

Die Ausbildung der Teilungsspuren 2.11 bis 2.15 wird im Folgenden anhand der ersten Teilungsspur 2.11 und der zweiten Teilungsspur 2.12 genauer beschrieben. Die erste Teilungsspur 2.11 und die zweite Teilungsspur 2.12 sind gemäß der Figur 4 aus Stegen 2.111, 2.121 und Lücken 2.112, 2.122 gebildet, die entlang der ersten Richtung X abwechselnd beziehungsweise alternierend angeordnet sind, so dass zwischen den Stegen 2.111, 2.121 jeweils Lücken 2.112, 2.122 vorliegen. Die Teilungsspuren 2.11, 2.12 bestehen demnach jeweils aus einer Abfolge von alternierend angeordneten Stegen 2.111, 2.121 und Lücken 2.112, 2.122. In der ersten Teilungsspur 2.11 entspricht, bezüglich der ersten Richtung X, die Summe der Länge eines Steges 2.111 und einer Lücke 2.112 einer ersten Periodenlänge P11. Analog entspricht in der zweiten Teilungsspur 2.12 die Summe der Länge eines Steges 2.121 und einer Lücke 2.122 einer zweiten Periodenlänge P12. Innerhalb einer Periodenlänge P11, P12 befinden sich also jeweils genau ein Steg 2.111, 2.121 und eine Lücke 2.112, 2.122.

Weiterhin wird bei der Strukturierung der Teilungsschicht 2.1 im Zuge der Laserablation ein so genannter Abschirmsteg 2.16 erzeugt beziehungsweise stehen gelassen. Dieser Abschirmsteg 2.16 ist bezogen auf die zweite Richtung Y zwischen der ersten Teilungsspur 2.11 und der zweiten Teilungsspur 2.12 angeordnet und verläuft entlang der ersten Richtung X. Die Länge des Abschirmstegs 2.16 in der ersten Richtung X ist wesentlich größer als die erste Periodenlänge P11 oder die zweite Periodenlänge P12.

Die Stege 2.111, 2.121 und der Abschirmsteg 2.16 sind aus demselben zweiten Material und elektrisch leitend. Das erste Material der Trägerschicht 2.3 ist auch elektrisch leitend. Zwischen der Trägerschicht 2.3 und den Stegen 2.111, 2.121 ist daher ein Stromfluss möglich, ebenso zwischen der Trägerschicht 2.3 und dem Abschirmsteg 2.16.

Analog sind auch die dritte bis fünfte Teilungsspur 2.13 bis 2.15 ausgestaltet, zwischen denen dann jeweils weitere Abschirmstege 2.16 angeordnet sind. Die Abschirmstege 2.16 weisen allesamt die gleiche Dicke beziehungsweise Ausdehnung T21 in der dritten Richtung Z auf, wie auch die Stege 2.111, 2.121 der ersten und zweiten Teilungsspur 2.11, 2.12. Gleiches gilt für die dritten bis fünften Teilungsspuren 2.13 bis 2.15. Auf diese Weise wird ein Skalenelement 2 hergestellt, das in der Draufsicht in der Figur 4 gezeigt ist (dort sind die Oberflächen der Stege 2.111, 2.121 und der Abschirmstege 2.16 durch eine Schraffur hervorgehoben).

Die Trägerschicht 2.3 ist bezogen auf die dritte Richtung Z zwischen den Teilungsspuren 2.11, 2.12 und der Kompensationsschicht 2.2 angeordnet. Die Kompensationsschicht 2.2 dient im Wesentlichen dazu, eine hohe Formstabilität und eine gute Ebenheit des Skalenelements 2 zu gewährleisten.

In der Figur 5 ist eine Draufsicht auf das Abtastelement 1 gezeigt. Dieses ist als eine Leiterplatte, welche mehrere Lagen aufweist, ausgestaltet, wobei auf der in der Figur 5 nicht sichtbaren Rückseite elektronische Bauteile montiert sind. Das Abtastelement 1 dient zur Abtastung des Skalenelements 2.

Zur Bestimmung der Relativposition zwischen dem Skalenelement 2 und dem Abtastelement 1 weist das Abtastelement 1 eine erste Empfängerspur 1.1, eine zweite Empfängerspur 1.2, eine dritte Empfängerspur 1.3, eine vierte Empfängerspur 1.4 und eine fünfte Empfängerspur 1.5 auf. Die Empfängerspuren 1.1 bis1.5 sind von einer Erregerleitung 1.6 umschlossen.

Wie aus der Figur 5 ersichtlich, sind die Empfängerspuren 1.1 bis1.5 in der zweiten Richtung Y versetzt zueinander angeordnet, wobei zwischen zwei benachbarten Empfängerspuren 1.1 bis1.5 ein Abstand in der zweiten Richtung Y vorliegt, so dass dort jeweils ein Abstandsstreifen 1.7 existiert.

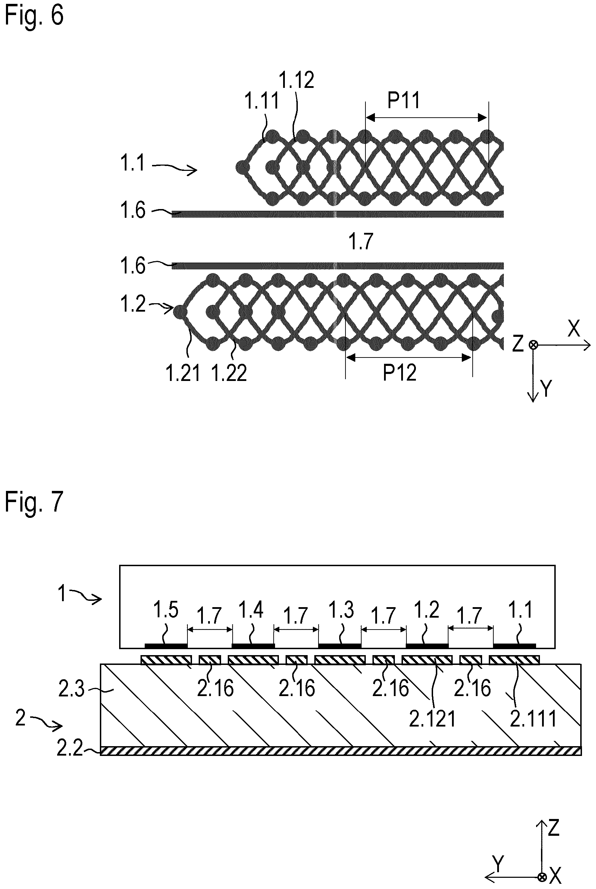

In der Figur 6 sind die erste Empfängerspur 1.1 und die zweite Empfängerspur 1.2 in einer Detailansicht vergrößert gezeigt. Die erste Empfängerspur 1.1 umfasst eine erste Empfängerleitung 1.11 und eine zweite Empfängerleitung 1.12. Analog umfasst die zweite Empfängerspur 1.2 eine dritte Empfängerleitung 1.21 und eine vierte Empfängerleitung 1.22.

Die erste Empfängerspur 1.1 und die zweite Empfängerspur 1.2 umfassen also im vorgestellten Ausführungsbeispiel jeweils zwei Empfängerleitungen 1.11, 1.12, 1.21, 1.22, die jeweils in der ersten Richtung X versetzt angeordnet sind, so dass diese dem Versatz entsprechend jeweils zwei phasenverschobene Signale liefern können. Die Empfängerleitungen 1.11, 1.12, 1.21, 1.22 sind hier als Leiterbahnen ausgestaltet und verlaufen mit Vias verbunden in unterschiedlichen Lagen der Leiterplatte beziehungsweise des Abtastelements 1, so dass an Kreuzungspunkten unerwünschte Kurzschlüsse vermieden werden. Wenngleich genau genommen jede der Empfängerleitungen 1.11, 1.12, 1.21, 1.22 aus vielen Leiterstücken besteht, die jeweils auf mehreren verschiedenen Ebenen beziehungsweise Lagen verteilt und aneinandergereiht sind, wird im Folgenden eine derartige Struktur zusammenfassend jeweils als eine Empfängerleitung 1.11, 1.12, 1.21, 1.22 bezeichnet.

Die erste Empfängerleitung 1.11 verläuft gemäß einem ersten periodischen Muster entlang der ersten Richtung X und die zweite Empfängerleitung1.12 gemäß einem zweiten periodischen Muster. Die Empfängerleitungen 1.11, 1.12, 1.21, 1.22 weisen insbesondere einen räumlich periodischen Verlauf auf, der im Wesentlichen sinusförmig beziehungsweise sinusartig ausgestaltet ist, wobei alle Empfängerleitungen 1.11, 1.12 der ersten Empfängerspur 1.1 eine erste Periodenlänge P11 (Figur 6) aufweisen. Die Empfängerleitungen 1.21, 1.22 der zweiten Empfängerspur 1.2 weisen eine zweite Periodenlänge P12 auf. Hier ist die zweite Periodenlänge P12 größer als die erste Periodenlänge P11.

Im vorgestellten Ausführungsbeispiel sind innerhalb der ersten Empfängerspur 1.1 die Empfängerleitungen 1.11, 1.12 um ¼ der ersten Periodenlänge P11 entlang der ersten Richtung X zueinander versetzt angeordnet. Die Empfängerleitungen 1.11, 1.12 sind elektrisch so verschaltet, dass diese 0° und 90°-Signale liefern, aus denen ein erstes Positionssignal bestimmt werden kann. Durch die ersten Empfängerleitungen 1.11, 1.12 kann im Grunde ein vergleichsweise hochauflösendes Inkrementalsignal bei einer Relativbewegung des Skalenelements 2 gegenüber dem Abtastelement 1 erzeugt werden.

Die zweite Empfängerspur 1.2 umfasst im vorgestellten Ausführungsbeispiel gemäß der Figur 6 eine dritte Empfängerleitung 1.21 und eine vierte Empfängerleitung 1.22, also zwei Empfängerleitungen 1.21, 1.22, die in der ersten Richtung X versetzt zueinander angeordnet sind, so dass diese dem Versatz entsprechend zwei um 90° phasenverschobene Signale liefern können. Die Empfängerleitungen 1.21, 1.22 sind als Leiterbahnen ausgestaltet und verlaufen auch hier mit Vias verbunden in unterschiedlichen Lagen der Leiterplatte beziehungsweise des Abtastelements 1.

Im Übrigen gilt, dass auf dem Abtastelement 1 die erste Periodenlänge P11 die kleinste Periodenlänge ist, welche genauso groß ist wie die Periodenlänge der fünften Empfängerspur 1.5. Die mittlere dritte Empfängerspur 1.3 weist eine Periodenlänge auf, die geringfügig größer ist als die erste Periodenlänge P11. Die zweite Periodenlänge P12 wie auch die Periodenlänge der vierten Empfängerspur 1.4 sind größer als die erste Periodenlänge P11 und größer als die Periodenlänge der dritten Empfängerspur 1.3. Die gleiche Betrachtung bezüglich der Periodenlängen gilt analog auch für die Teilungsspuren 2.11 bis 2.15 des Skalenelements 2.

Im zusammengebauten Zustand der Positionsmesseinrichtung gemäß der Figur 7 stehen sich das Abtastelement 1 und das Skalenelement 2 mit einem Luftspalt, der sich in der dritten Richtung Z erstreckt, gegenüber. Bei einer Relativbewegung zwischen dem Skalenelement 2 und dem Abtastelement 1 ist dann in den Empfängerleitungen 1.11, 1.12, 1.21, 1.22 jeweils ein von der Relativposition abhängiges Signal durch Induktionseffekte erzeugbar. Voraussetzung für die Bildung von entsprechenden Signalen ist, dass die Erregerleitung 1.6 ein zeitlich wechselndes elektromagnetisches Erregerfeld im Bereich der jeweilig abgetasteten Teilungsspuren 2.11 bis 2.15 erzeugt. Im dargestellten Ausführungsbeispiel ist die Erregerleitung 1.6 als mehrere planar-parallele stromdurchflossene Einzel-Leiterbahnen ausgebildet. Das Abtastelement 1 weist eine elektronische Schaltung mit den elektronischen Bauteilen auf. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleitung 1.6 fließt.

Wird die Erregerleitung 1.6 bestromt, so bildet sich um die Erregerleitung 1.6 ein schlauch- bzw. zylinderförmig orientiertes elektromagnetisches Feld aus. Die Feldlinien des resultierenden elektromagnetischen Feldes verlaufen um die Erregerleitung 1.6, wobei die Richtung der Feldlinien in bekannter Art und Weise von der Stromrichtung in der Erregerleitung 1.6 abhängt. Im Bereich der Stege 2.111, 2.121 werden Wirbelströme induziert, so dass jeweils eine von der Relativposition abhängige Modulation des Feldes erreicht wird. Entsprechend kann durch die Empfängerleitungen 1.11, 1.12, 1.21, 1.22 jeweils die Relativposition gemessen werden.

Alle Empfängerleitungen 1.11, 1.12 der ersten Empfängerspur 1.1 weisen jeweils die gleiche erste Periodenlänge P11 auf und die Empfängerleitungen 1.21, 1.22 der zweiten Empfängerspur 1.2 weisen jeweils die gleiche zweite Periodenlänge P12 auf. Die Abtastung beider Empfängerspuren 1.1, 1.2 erfolgt gleichzeitig, es ist keine Umschaltung zwischen einzelnen Empfängerspuren 1.1, 1.2 erforderlich. Beim Überstreichen eines Steges 2.111, 2.121 und einer Lücke 2.112, 2.122 wird durch das Abtastelement 1 eine Signalperiode erzeugt. Die erste Empfängerspur 1.1 mit ihren Empfängerleitungen 1.11, 1.12, die mit einer kleineren ersten Periodenlänge P11 verlaufen, tastet das Skalenelement 2 ab, so dass durch die erste Empfängerspur 1.1 eine vergleichsweise feine Bestimmung der Relativposition erreichbar ist. Gleichzeitig tastet die benachbarte zweite Empfängerspur 1.2 mit ihren Empfängerleitungen 1.21, 1.22, die mit einer gröberen zweiten Periodenlänge P12 verlaufen, das Skalenelement 2 ab. Durch die zweite Empfängerspur 1.2 ist somit eine vergleichsweise gröbere Bestimmung der Relativposition erreichbar.

Ebenso werden Signale in der dritten, vierten und fünften Empfängerspur 1.3 bis 1.5 bei der Abtastung der dritten, vierten und fünften Teilungsspur 2.13 bis 2.15 erzeugt beziehungsweise empfangen.

Die empfangenen Signale werden mit Hilfe eines Schwebungs- beziehungsweise Noniusalgorithmus verknüpft, so dass durch die Signale die Relativposition zwischen dem Abtastelement 1 und dem Skalenelement 2 absolut bestimmt werden kann.

Das Vorsehen von fünf Teilungsspuren 2.11 bis 2.15 und fünf Empfängerspuren 1.1 bis 1.5 hat unter anderem den Vorteil, dass die Messung vergleichsweise unempfindlich gegenüber einer Verdrehung des Skalenelements 2 relativ zum Abtastelement 1 ist (Minimierung des Moirè-Fehlers).

In unmittelbar benachbarten Empfängerspuren 1.1, 1.2 würde bei der hier vorgestellten Gestaltung der Teilungsspuren 2.11, 2.12 ein Übersprechsignal entstehen, das typischerweise eine Sinusform mit einer Übersprechperiodenlänge von circa fünfzehn zweiten Periodenlängen P12 oder sechzehn ersten Periodenlängen P11 aufweist. Die Längen der Empfängerleitungen 1.21, 1.22 in der ersten Richtung X entsprechen in etwa dieser Übersprechperiodenlänge. Diese Dimensionierung kann dazu beitragen, dass ein Übersprechen beim Abtasten unmittelbar benachbarter Teilungsspuren 2.11, 2.12 von vornherein in gewissen Grenzen reduziert ist. Es hat sich gezeigt, dass sich trotzdem bei der Verwendung herkömmlicher Skalenelemente mit einer elektrisch leitfähigen Teilung auf einem elektrisch leitfähigen Substrat Übersprecheffekte feststellbar sind. Durch die Erfindung ist es möglich das Übersprechen signifikant zu minimieren und damit die Messgenauigkeit zu optimieren.

## Patentansprüche

1. Induktive Positionsmesseinrichtung, die ein Abtastelement (1) und ein Skalenelement (2) aufweist, wobei das Abtastelement (1) relativ zum Skalenelement (2) in einer ersten Richtung (X) bewegbar angeordnet ist, und
- das Abtastelement (1)
¬ zumindest eine Erregerleitung (1.6) aufweist,
¬ eine erste Empfängerspur (1.1) aufweist, die zumindest eine Empfängerleitung (1.11, 1.12) umfasst, welche gemäß einem ersten periodischen Muster entlang der ersten Richtung (X) verläuft, und
¬ eine zweite Empfängerspur (1.2) aufweist, die zumindest eine Empfängerleitung (1.21, 1.22) umfasst, welche gemäß einem zweiten periodischen Muster entlang der ersten Richtung (X) verläuft und bezüglich der ersten Empfängerspur (1.1) in einer zweiten Richtung (Y) versetzt angeordnet ist, so dass zwischen diesen in der ersten Richtung (X) ein Abstandsstreifen (1.7) verläuft, wobei
- das Skalenelement (2)
¬ eine Trägerschicht (2.3) aus einem ersten elektrisch leitfähigen Material aufweist,
¬ eine erste Teilungsspur (2.11) umfasst, und
¬ eine zweite Teilungsspur (2.12) umfasst, die bezüglich der ersten Teilungsspur (2.11) in der zweiten Richtung (Y) versetzt angeordnet ist, wobei
die erste Teilungsspur (2.11) und die zweite Teilungsspur (2.12) auf der Trägerschicht (2.3) angeordnet sind und aus entlang der ersten Richtung (X) alternierend angeordneten Stegen (2.111, 2.121) und Lücken (2.112, 2.122) gebildet sind, wobei
die Stege (2.111, 2.121) aus einem zweiten elektrisch leitfähigen Material sind, das sich von dem ersten Material der Trägerschicht (2.3) unterscheidet, wobei
bezogen auf die zweite Richtung (Y) zwischen der ersten Teilungsspur (2.11) und der zweiten Teilungsspur (2.12) ein Abschirmsteg (2.16) aus elektrisch leitfähigem Material angeordnet ist, wobei dieser in einer dritten Richtung (Z) versetzt gegenüberliegend des Abstandsstreifens (1.7) angeordnet ist, wobei die dritte Richtung (Z) orthogonal zur ersten Richtung (X) und zur zweiten Richtung (Y) orientiert ist.

2. Induktive Positionsmesseinrichtung gemäß dem Anspruch 1, wobei das erste Material der Trägerschicht (2.3) der Gruppe der ferritischen Edelstähle zugeordnet ist.

3. Induktive Positionsmesseinrichtung gemäß einem der vorhergehenden Ansprüche, wobei die Teilungsspuren (2.11, 2.12) durch Strukturierung einer elektrisch leitfähigen Teilungsschicht (2.1) erzeugt sind.

4. Induktive Positionsmesseinrichtung gemäß einem der vorhergehenden Ansprüche, wobei die Stege (2.111, 2.121) und der Abschirmsteg (2.16) jeweils die gleiche Ausdehnung (T21) in der dritten Richtung (Z) aufweisen.

5. Induktive Positionsmesseinrichtung gemäß einem der vorhergehenden Ansprüche, wobei die Stege (2.111, 2.121) in der dritten Richtung (Z) eine Ausdehnung (T21) von mindestens 5 µm aufweisen.

6. Induktive Positionsmesseinrichtung gemäß einem der vorhergehenden Ansprüche, wobei das erste Material der Trägerschicht (2.3) eine Permeabilitätszahl von mindestens 100 aufweist.

7. Induktive Positionsmesseinrichtung gemäß einem der vorhergehenden Ansprüche, wobei das Skalenelement (2) eine Kompensationsschicht (2.2) aufweist, wobei die Trägerschicht (2.3) bezogen auf die dritte Richtung (Z) zwischen den Teilungsspuren (2.11, 2.12) und der Kompensationsschicht (2.2) angeordnet ist.

8. Induktive Positionsmesseinrichtung gemäß dem Anspruch 7, wobei die Kompensationsschicht (2.2) das gleiche zweite Material umfasst wie das der Stege (2.111, 2.121).

9. Induktive Positionsmesseinrichtung gemäß einem der vorhergehenden Ansprüche, wobei das erste elektrisch leitfähige Material der Trägerschicht (2.3) einen höheren spezifischen Widerstand aufweist als das zweite elektrisch leitfähige Material der Stege (2.111, 2.121) und / oder des Abschirmstegs (2.16).

10. Induktive Positionsmesseinrichtung gemäß einem der vorhergehenden Ansprüche, wobei die Ausdehnung in der ersten Richtung (X) eines Steges (2.111) und einer Lücke (2.112) der ersten Teilungsspur (2.11) in Summe eine erste Periodenlänge (P11) aufweist, und die Ausdehnung in der ersten Richtung (X) eines Steges (2.121) und einer Lücke (2.122) der zweiten Teilungsspur (2.12) in Summe eine zweite Periodenlänge (P12) aufweist, wobei die erste Periodenlänge (P11) und die zweite Periodenlänge (P12) unterschiedlich groß sind.

11. Induktive Positionsmesseinrichtung gemäß einem der vorhergehenden Ansprüche, wobei das erste periodische Muster eine erste Periodenlänge (P11) aufweist und das zweite periodische Muster eine zweite Periodenlänge (P12) aufweist, wobei die erste Periodenlänge (P11) und die zweite Periodenlänge (P12) unterschiedlich groß sind.

12. Induktive Positionsmesseinrichtung gemäß einem der vorhergehenden Ansprüche, wobei das erste periodische Muster eine erste Periodenlänge (P11) aufweist und das zweite periodische Muster eine zweite Periodenlänge (P12), wobei sich der Abschirmsteg (2.16) entlang der ersten Richtung (X) über eine Länge erstreckt, die größer ist als die erste Periodenlänge (P11) oder die zweite Periodenlänge (P12).

## Claims

1. Inductive position measuring device comprising a scanning element (1) and a scale element (2), wherein the scanning element (1) is arranged movably relative to the scale element (2) in a first direction (X), and
- the scanning element (1)
┐ comprises at least one excitation line (1.6),
┐ comprises a first receiver track (1.1) comprising at least one receiver line (1.11, 1.12) which runs along the first direction (X) in accordance with a first periodic pattern, and
┐ comprises a second receiver track (1.2) comprising at least one receiver line (1.21, 1.22) which runs along the first direction (X) in accordance with a second periodic pattern and is arranged offset in a second direction (Y) with respect to the first receiver track (1.1), so that a spacer strip (1.7) runs between them in the first direction (X), wherein
- the scale element (2)
┐ comprises a carrier layer (2.3) composed of a first electrically conductive material,
┐ comprises a first graduation track (2.11), and
┐ comprises a second graduation track (2.12) arranged offset in the second direction (Y) with respect to the first graduation track (2.11), wherein
the first graduation track (2.11) and the second graduation track (2.12) are arranged on the carrier layer (2.3) and are formed from webs (2.111, 2.121) and gaps (2.112, 2.122) arranged alternately along the first direction (X), wherein
the webs (2.111, 2.121) are composed of a second electrically conductive material, which differs from the first material of the carrier layer (2.3), wherein
a shielding web (2.16) composed of electrically conductive material is arranged between the first graduation track (2.11) and the second graduation track (2.12) relative to the second direction (Y), wherein said shielding web is arranged offset in a third direction (Z) opposite the spacer strip (1.7), wherein the third direction (Z) is oriented orthogonally to the first direction (X) and to the second direction (Y).

2. Inductive position measuring device according to Claim 1, wherein the first material of the carrier layer (2.3) is assigned to the group of ferritic high-grade steels.

3. Inductive position measuring device according to either of the preceding claims, wherein the graduation tracks (2.11, 2.12) are produced by structuring an electrically conductive graduation layer (2.1).

4. Inductive position measuring device according to any of the preceding claims, wherein the webs (2.111, 2.121) and the shielding web (2.16) each have the same extent (T21) in the third direction (Z).

5. Inductive position measuring device according to any of the preceding claims, wherein the webs (2.111, 2.121) have an extent (T21) of at least 5 µm in the third direction (Z).

6. Inductive position measuring device according to any of the preceding claims, wherein the first material of the carrier layer (2.3) has a relative permeability of at least 100.

7. Inductive position measuring device according to any of the preceding claims, wherein the scale element (2) comprises a compensation layer (2.2), wherein the carrier layer (2.3) is arranged between the graduation tracks (2.11, 2.12) and the compensation layer (2.2) relative to the third direction (Z).

8. Inductive position measuring device according to Claim 7, wherein the compensation layer (2.2) comprises the same second material as that of the webs (2.111, 2.121).

9. Inductive position measuring device according to any of the preceding claims, wherein the first electrically conductive material of the carrier layer (2.3) has a higher resistivity than the second electrically conductive material of the webs (2.111, 2.121) and/or of the shielding web (2.16).

10. Inductive position measuring device according to any of the preceding claims, wherein the extent in the first direction (X) of a web (2.111) and of a gap (2.112) of the first graduation track (2.11) in total has a first period length (P11), and the extent in the first direction (X) of a web (2.121) and of a gap (2.122) of the second graduation track (2.12) in total has a second period length (P12), wherein the first period length (P11) and the second period length (P12) are different in magnitude.

11. Inductive position measuring device according to any of the preceding claims, wherein the first periodic pattern has a first period length (P11) and the second periodic pattern has a second period length (P12), wherein the first period length (P11) and the second period length (P12) are different in magnitude.

12. Inductive position measuring device according to any of the preceding claims, wherein the first periodic pattern has a first period length (P11) and the second periodic pattern has a second period length (P12), wherein the shielding web (2.16) extends along the first direction (X) over a length that is greater than the first period length (P11) or the second period length (P12).

## Revendications

1. Dispositif inductif de mesure de position, qui comporte un élément de balayage (1) et un élément d'échelle (2), l'élément de balayage (1) étant disposé mobile dans une première direction (X) par rapport à l'élément d'échelle (2), et
- l'élément de balayage (1)
┐ comporte au moins une ligne d'excitation (1.6),
┐ comporte une première piste de réception (1.1) qui comprend au moins une ligne de réception (1.11, 1.12), laquelle s'étend le long de la première direction (X) selon un premier motif périodique, et
┐ comporte une deuxième piste de réception (1.2) qui comprend au moins une ligne de réception (1.21, 1.22), laquelle s'étend selon un deuxième motif périodique le long de la première direction (X) et est disposée de manière décalée dans une deuxième direction (Y) par rapport à la première piste de réception (1.1), de telle sorte qu'une bande d'écartement (1.7) s'étend entre celles-ci dans la première direction (X), dans lequel
- l'élément d'échelle (2)
┐ comporte une couche de support (2.3) composée d'un premier matériau électriquement conducteur,
┐ une première piste de graduation (2.11), et
┐ une deuxième piste de graduation (2.12), qui est disposée de manière décalée dans la deuxième direction (Y) par rapport à la première piste de graduation (2.11), dans lequel
la première piste de graduation (2.11) et la deuxième piste de graduation (2.12) sont disposées sur la couche de support (2.3) et sont formées à partir de nervures (2.111, 2.121) et d'espaces (2.112, 2.122) disposés en alternance le long de la première direction (X), dans lequel
les nervures (2.111, 2.121) sont constituées d'un deuxième matériau électriquement conducteur qui diffère du premier matériau de la couche de support (2.3), dans lequel,
par rapport à la deuxième direction (Y), une nervure de blindage (2.16) en matériau électriquement conducteur est disposée entre la première piste de graduation (2.11) et la deuxième piste de graduation (2.12), ladite nervure de blindage étant disposée de manière décalée dans une troisième direction (Z) en face de la bande d'écartement (1.7), la troisième direction (Z) étant orientée perpendiculairement à la première direction (X) et à la deuxième direction (Y).

2. Dispositif inductif de mesure de position selon la revendication 1, **caractérisé en ce que** le premier matériau de la couche de support (2.3) est associé au groupe des aciers inoxydables ferritiques.

3. Dispositif inductif de mesure de position selon l'une quelconque des revendications précédentes, **caractérisé en ce que** les pistes de graduation (2.11, 2.12) sont produites par structuration d'une couche de graduation (2.1) électriquement conductrice.

4. Dispositif inductif de mesure de position selon l'une quelconque des revendications précédentes, **caractérisé en ce que** les nervures (2.111, 2.121) et la nervure de blindage (2.16) présentent chacune la même étendue (T21) dans la troisième direction (Z).

5. Dispositif inductif de mesure de position selon l'une quelconque des revendications précédentes, **caractérisé en ce que** les nervures (2.111, 2.121) présentent une étendue (T21) d'au moins 5 µm dans la troisième direction (Z).

6. Dispositif inductif de mesure de position selon l'une quelconque des revendications précédentes, dans lequel le premier matériau de la couche de support (2.3) présente un indice de perméabilité d'au moins 100.

7. Dispositif inductif de mesure de position selon l'une quelconque des revendications précédentes, **caractérisé en ce que** l'élément d'échelle (2) comporte une couche de compensation (2.2), la couche de support (2.3) étant disposée entre les pistes de graduation (2.11, 2.12) et la couche de compensation (2.2) par rapport à la troisième direction (Z).

8. Dispositif inductif de mesure de position selon la revendication 7, **caractérisé en ce que** la couche de compensation (2.2) comprend le même deuxième matériau que celui des nervures (2.111, 2.121).

9. Dispositif inductif de mesure de position selon l'une quelconque des revendications précédentes, **caractérisé en ce que** le premier matériau électriquement conducteur de la couche de support (2.3) présente une résistance spécifique plus élevée que le deuxième matériau électriquement conducteur des nervures (2.111, 2.121) et/ou de la nervure de blindage (2.16).

10. Dispositif inductif de mesure de position selon l'une quelconque des revendications précédentes, **caractérisé en ce que** l'étendue dans la première direction (X) d'une nervure (2.111) et d'un espace (2.112) de la première piste de graduation (2.11) présente au total une première longueur de période (P11), et **en ce que** l'étendue dans la première direction (X) d'une nervure (2.121) et d'un espace (2.122) de la deuxième piste de graduation (2.12) présente au total une deuxième longueur de période (P12), la première longueur de période (P11) et la deuxième longueur de période (P12) ayant des valeurs différentes.

11. Dispositif inductif de mesure de position selon l'une quelconque des revendications précédentes, dans lequel le premier motif périodique présente une première longueur de période (P11) et le deuxième motif périodique présente une deuxième longueur de période (P12), la première longueur de période (P11) et la deuxième longueur de période (P12) ayant des valeurs différentes.

12. Dispositif inductif de mesure de position selon l'une quelconque des revendications précédentes, dans lequel le premier motif périodique présente une première longueur de période (P11) et le deuxième motif périodique présente une deuxième longueur de période (P12), la nervure de blindage (2.16) s'étendant le long de la première direction (X) sur une longueur qui est supérieure à la première longueur de période (P11) ou à la deuxième longueur de période (P12).
